# EUROPEAN PATENT SPECIFICATION

(11) **EP 4 174 464 B1**
(45) Date of publication and mention of the grant of the patent: **09.10.2024**
(21) Application number: 22202470.5
(22) Date of filing: 19.10.2022
(51) Int. Cl.: G01L 3/10

(54) **MAGNETOSTRICTIVE TORQUE SENSOR**
MAGNETOSTRIKTIVER DREHMOMENTSENSOR
CAPTEUR DE COUPLE MAGNÉTOSTRICTIF

(30) Priority: 26.10.2021 JP 2021174670
(43) Date of publication of application: 03.05.2023
(73) Proprietor: Proterial, Ltd., Tokyo 135-0061 (JP); NSK Ltd., Tokyo 141-8560 (JP)
(72) Inventor: JIN, Yiming, Tokyo (JP); ONIMOTO, Takashi, Tokyo (JP); FUJIMORI, Akitoshi, Tokyo (JP); URAKAMI, Seigou, Kanagawa (JP); FUKUDA, Kota, Shizuoka (JP)
(74) Representative: Betten & Resch

(56) References cited:
- JP-A- 2020 085 814

## Description

### TECHNICAL FIELD

The present invention relates to a magnetostrictive torque sensor.

### BACKGROUND ART

Patent Literature 1 discloses a magnetostrictive torque sensor in which a sensor section is covered with an inner mold. The sensor section has a detection coil, a resin bobbin arranged on an inner peripheral side of the detection coil, and a magnetic body ring made of a ferromagnetic material arranged on an outer peripheral side of the detection coil.

### Prior Art Documents

### Patent Literatures

Patent Literature 1: JP-A-2020-085814

### SUMMARY OF THE INVENTION

In the magnetostrictive torque sensor disclosed in Patent Literature 1, there is a possibility that a resin for forming the inner mold may enter an arrangement space for the detection coil from between the bobbin and the magnetic body ring during molding of the inner mold. If the inner mold enters the arrangement space for the detection coil, the position of the detection coil may shift from a desired position, or the detection coil may break.

Therefore, it is an object of the present invention to provide a magnetostrictive torque sensor capable of suppressing an entry of a resin mold section around a detection coil.

So as to achieve the above object, one aspect of the present invention, as defined in independent claim 1, provides: a magnetostrictive torque sensor for detecting a torque applied to a magnetostrictive member having magnetostrictive properties.

### [Effect of the invention]

According to the present invention, it is possible to provide a magnetostrictive torque sensor capable of suppressing an entry of a resin mold section around the detection coil.

### BRIEF DESCRIPTION OF DRAWINGS

FIG. 1 is a perspective view of a magnetostrictive torque sensor according to an embodiment of the present invention.
FIG. 2 is a cross-sectional view around a detection coil of the magnetostrictive torque sensor in the embodiment of the present invention.
FIG. 3 is an enlarged view around a plug member in FIG. 2.
FIG. 4 is a cross-sectional view around a heat shrinkable tube of the magnetostrictive torque sensor in the embodiment of the present invention.
FIG. 5 is a schematic diagram showing the state of using the magnetostrictive torque sensor in the embodiment of the invention.

### BEST MODE FOR CARRYING OUT THE INVENTION

### [Embodiment]

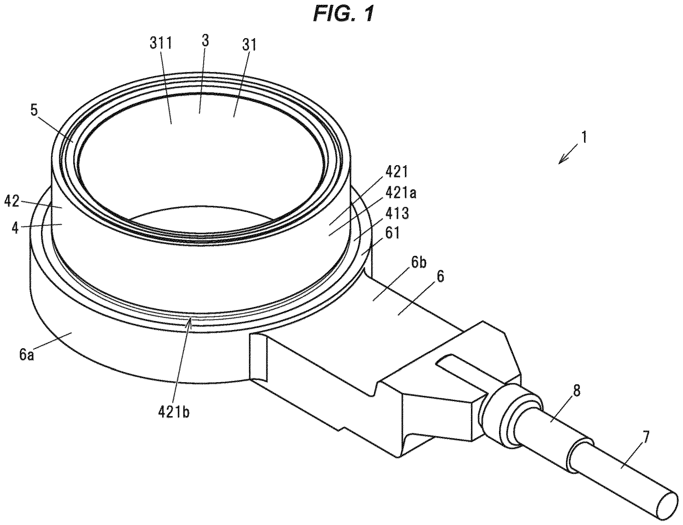

An embodiment of the present invention will be described with reference to FIGS. 1 to 5. It should be noted that the embodiment described below is shown as a preferred specific example for carrying out the present invention, and there are portions that specifically illustrate various technically preferable technical matters. However, the technical scope of the present invention is not limited to this specific embodiment.

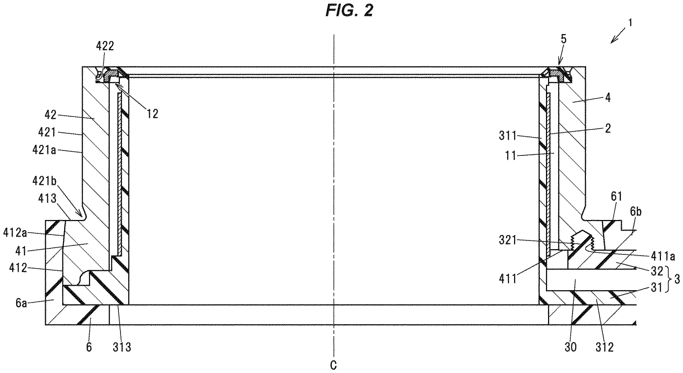

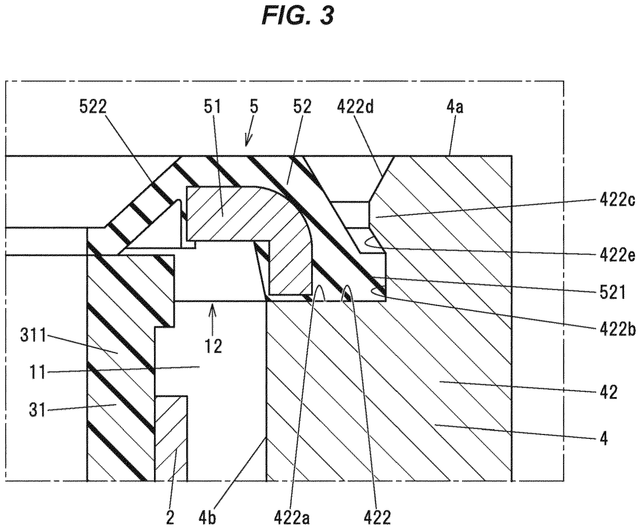

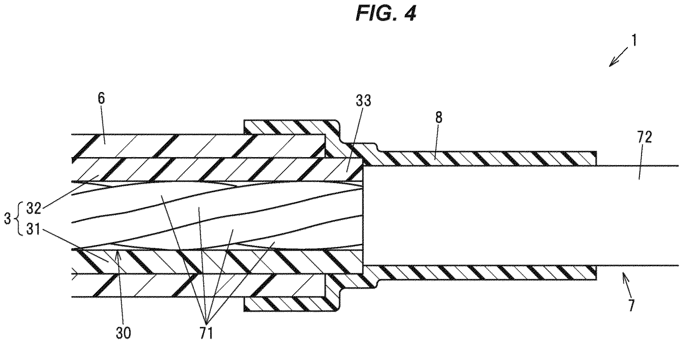

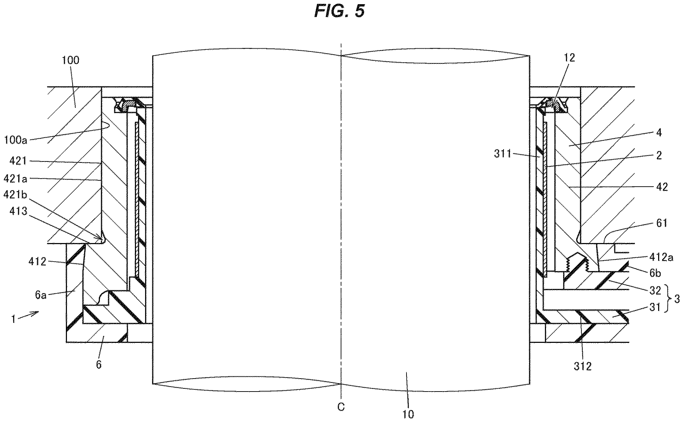

FIG. 1 is a perspective view of a magnetostrictive torque sensor 1 according to an embodiment of the present invention. FIG. 2 is a cross-sectional view around a detection coil 2 of the magnetostrictive torque sensor 1 in the embodiment of the present invention. FIG. 3 is an enlarged view around a plug member 5 in FIG. 2. FIG. 4 is a cross-sectional view around a heat shrinkable tube 8 of the magnetostrictive torque sensor 1 in the embodiment of the present invention. FIG. 5 is a schematic diagram showing the state of using the magnetostrictive torque sensor 1 in the embodiment of the invention.

The magnetostrictive torque sensor 1 is used to measure the rotational torque applied to a magnetostrictive member 10 (see FIG. 5) having magnetostrictive properties. Magnetostriction is a phenomenon in which distortion (strain) appears in a ferromagnetic material when a magnetic field is applied to the ferromagnetic material to magnetize it. The magnetostrictive torque sensor 1 reversely utilizes this phenomenon and detects the torque acting on the magnetostrictive member 10 by detecting the magnetic field generated by the distortion of the magnetostrictive member 10 with the detection coil 2. The magnetostrictive member 10 whose rotational torque is to be measured (i.e., measuring object) can be, e.g., a predetermined rotating shaft used in a vehicle. The magnetostrictive torque sensor 1 comprises a detection coil 2, a housing 3, a magnetic ring 4, a plug member 5, a resin mold section 6, a cable 7, and a heat shrinkable tube 8.

As shown in FIG. 5, the detection coil 2 is arranged so as to surround the magnetostrictive member 10 from the outer peripheral side. The detection coil 2 outputs an electric signal corresponding to the magnitude of torque applied to the magnetostrictive member 10 to a control device or the like outside the magnetostrictive torque sensor 1 through the cable 7. The detection coil 2 can be configured by, for example, a pattern formed on a flexible substrate, or can be configured by winding an insulated wire (i.e., electrically insulated electric wire) in a coil shape. The configuration of the detection coil 2, such as the shape and number, can adopt the configuration of detection coils of conventional magnetostrictive torque sensors. The detection coil 2 is fixed to housing 3.

As shown in FIG. 2, the housing 3 is made of an electrically insulating resin or the like. In this embodiment, the housing 3 is a combination of a first housing 31 and a second housing 32. The first housing 31 has a substantially cylindrical facing portion 311 facing the magnetic ring 4 across the detection coil 2, and an extending portion 312 extending from one end portion of the facing portion 311 to the outer peripheral side of the facing portion 311. The facing portion 311 is formed substantially coaxially with the magnetostrictive member 10, the detection coil 2, and the magnetic ring 4. Hereinafter, a direction in which a central axis C of the magnetostrictive member 10, the facing portion 311, the detection coil 2, and the magnetic ring 4 extends is referred to as an axial direction. Also, one side in the axial direction, the side where the facing portion 311 stands against the extending portion 312 (for example, the upper side in FIG. 2) is referred to as an upper side, and the opposite side (for example, the lower side in FIG. 2) is referred to as a lower side. Note that a vertical direction is for convenience, and does not limit the posture of the magnetostrictive torque sensor 1 with respect to the vertical direction when the magnetostrictive torque sensor 1 is used.

The detection coil 2 is fixed to an outer peripheral surface of the facing portion 311. For example, when the detection coil 2 is composed of a pattern on a surface of a flexible substrate, the flexible substrate may be adhered to the outer peripheral surface of the facing portion 311 using an adhesive or the like.

The extending portion 312 is formed to extend in one direction perpendicular to the axial direction from the lower end portion of the facing portion 311. A wiring (not shown) between the detection coil 2 and the cable 7 is arranged on the upper side of the extending portion 312. This wiring (not shown) is accommodated in a wiring space 30 surrounded by the first housing 31 and the second housing 32.

The second housing 32 is arranged above the extending portion 312 and surrounds the wiring space 30 together with the first housing 31. The second housing 32 is formed to extend in one direction perpendicular to the axial direction, like the extending portion 312. An end portion of the second housing 32 closer to the facing portion 311 is provided with a retaining protrusion (i.e., retaining projection) 321 protruding upward. The retaining protrusion 321 is arranged to fill a retaining recess 411a provided on a lower surface of the magnetic ring 4. When the second housing 32 is molded, a resin for forming the second housing 32 enters the retaining recess 411a, so that the retaining protrusion 321 has the same shape as the space in the retaining recess 411a In this embodiment, an inner peripheral surface of the retaining recess 411a is formed in a screw groove shape, and accordingly, the outer peripheral surface of the retaining protrusion 321 is formed in a screw thread shape. Note that the inner peripheral surface of the retaining recess 411a and the outer peripheral surface of the retaining protrusion 321 may adopt other concave and convex shapes as long as they are secured against each other.

The magnetic ring 4 is formed to face the facing portion 311 across the detection coil 2. The magnetic ring 4 forms an arrangement space 11 in which the detection coil 2 is arranged between the facing portion 311 and the magnetic ring 4. The magnetic ring 4 is formed by forming a substantially cylindrical ferromagnetic material (soft magnetic material) made of metal (including an alloy) such as iron. By covering the detection coil 2 from the outer peripheral side, the magnetic ring 4 has the function of preventing the magnetic flux generated by the detection coil 2 from leaking to the outside and reducing the torque measurement accuracy of the magnetostrictive torque sensor 1. The arrangement space 11 is closed (plugged) at its lower side by the first housing 31, partially connected to the wiring space 30, and closed at its upper side by the plug member 5.

The magnetic ring 4 has a large-diameter portion 41 at the lower end portion, and a small-diameter portion 42 having a smaller outer diameter than the large-diameter portion 41 above the large-diameter portion 41. A fitting recess 411 that is recessed upward and is fitted to the second housing 32 is formed on a lower surface of the large-diameter portion 41. The retaining recess 411a is formed so as to open to a bottom surface of the fitting recess 411. A portion of the lower surface of the large-diameter portion 41 other than the portion where the fitting recess 411 is formed faces the upper surface of the first housing 31.

An outer peripheral surface of the large-diameter portion 41 is a covered outer peripheral surface 412, which is covered with the resin mold section 6, and an outer peripheral surface of the small-diameter portion 42 is an exposed outer peripheral surface 421, which is exposed from the resin mold section 6. The covered outer peripheral surface 412 has an enlarged diameter surface portion 412a that expands downward. By forming the enlarged diameter surface portion 412a on the covered outer peripheral surface 412, the magnetic ring 4 is prevented from slipping upward from the resin mold section 6. In this embodiment, the enlarged diameter surface portion 412a is tapered. The shape of the enlarged diameter surface portion 412a is not limited to a tapered shape as long as it can prevent the magnetic ring 4 from slipping off the resin mold section 6 upward. For example, the enlarged diameter surface portion 412a may be formed to have a step portion in which an outer diameter gradually increases as progresses downward.

An upward-facing annular surface 413 is provided between the covered outer peripheral surface 412 and the exposed outer peripheral surface 421 on the surface of the magnetic ring 4. The annular surface 413 has an annular shape and is formed in a plane perpendicular to the axial direction.

The exposed outer peripheral surface 421 has a cylindrical surface 421a, and a concave surface 421b that is formed below the cylindrical surface 421a and recessed radially inwardly from the cylindrical surface 421a. The cylindrical surface 421a is formed from the upper end of the exposed outer peripheral surface 421 to the concave surface 421b, and is formed in a cylindrical shape parallel to the axial direction. The concave surface 421b is formed along the entire circumference of a lower end portion of the exposed outer peripheral surface 421.

As shown in FIG. 5, the magnetostrictive torque sensor 1 is fixed to an attachment target 100 made of metal, to which the magnetostrictive torque sensor 1 is attached, by fitting the magnetic ring 4 to an inner peripheral surface of an attachment hole 100a of the attachment target 100 in such a manner that the exposed outer peripheral surface 421 faces the inner peripheral surface of the attachment hole 100a. The magnetic ring 4 is fitted onto the inner peripheral surface of the attachment hole 100a so as to have a loose fit or a tight fit. Here, in order to fit the magnetic ring 4 onto the inner peripheral surface of the attachment hole 100a as intended, the cylindrical surface 421a and the attachment hole 100a must be formed with high precision. In the present embodiment, both the magnetic ring 4 constituting the cylindrical surface 421a and the attachment target 100 constituting the attachment hole 100a are made of metal, so the cylindrical surface 421a and the attachment hole 100a can be formed with high precision. The magnetostrictive torque sensor 1 is inserted into the attachment hole 100a until the annular surface 413 abuts the attachment target 100. At this time, since the concave surface 421b is formed at the lower end portion of the exposed outer peripheral surface 421, the magnetostrictive torque sensor 1 can be inserted into the attachment hole 100a until the annular surface 413 abuts the attachment target 100.

Here, measures for preventing the magnetostrictive torque sensor 1 from rotating about the central axis C with respect to the attachment target 100 and from slipping out of the attachment hole 100a in the axial direction, in a state where the magnetostrictive torque sensor 1 is attached to the attachment target 100, will be explained. In the resin mold section 6, an annular portion formed around the magnetic ring 4 is referred to as a first portion 6a, and a portion extending from the first portion 6a and covering the extending portion 312 of the first housing 31 and the second housing 32 is referred to as a second portion 6b. Although not shown, in order to prevent the magnetostrictive torque sensor 1 from rotating with respect to the attachment target 100, the attachment target 100 can be formed with a recess for fitting the second portion 6b. In this case, the magnetostrictive torque sensor 1 is restricted from rotating with respect to the attachment target 100 by the second portion 6b interfering with the recess of the attachment target 100. Although not shown, in order to prevent the magnetostrictive torque sensor 1 from slipping out of the attachment hole 100a, it is possible to adopt a configuration in which a part of the attachment target 100 is brought into contact with the annular surface 413, and the lower side of the magnetostrictive torque sensor 1 is held by a retaining ring fitted in a circumferential groove provided in the attachment hole 100a. Alternatively, it is possible to adopt a configuration in which a part of the attachment target 100 is brought into contact with the annular surface 413, and a protrusion protruding outward which is provided on the first portion 6a of the resin mold section 6 is fitted into a circumferential groove provided in the attachment hole 100a, to prevent the magnetostrictive torque sensor 1 from slipping out of the inner peripheral surface of the attachment hole 100a. Furthermore, although not shown, a flange projecting outward is provided on the first portion 6a of the resin mold section 6, and a bolt is inserted through a collar provided on the flange and screwed into a female threaded hole provided on the attachment target 100, so that the magnetostrictive torque sensor 1 may be bolted to the attachment target 100. Furthermore, when the magnetic ring 4 is attached to the inner peripheral surface of the attachment hole 100a in a tight fit, the magnetic ring 4 can be attached to the inner peripheral surface of the attachment hole 100a by, for example, press fitting. In addition, as long as the magnetic ring 4 is configured to fit into the attachment hole 100a, it is possible to adopt various aspects.

As shown in FIG. 3, a step portion 422 is formed between an upper end surface 4a and an inner peripheral surface 4b of the magnetic ring 4. A plug member 5 is fitted to the step portion 422. The step portion 422 has a first surface 422a facing upward and connected to the inner peripheral surface 4b of the magnetic ring 4, and a second surface 422b facing radially inwardly and connected to the upper end surface 4a of the magnetic ring 4. The plug member 5 is arranged to contact both the first surface 422a and the lower end portion of the second surface 422b. The plug member 5 has an outer diameter greater than an inner diameter of the lower end portion of the second surface 422b in a free state before being assembled to the step portion 422, and is press-fitted into the step portion 422. As a result, when the plug member 5 is assembled to the step portion 422, an outer peripheral end portion of the plug member 5 is in elastic contact with the second surface 422b, ensuring sealing between the plug member 5 and the second surface 422b. As described above, the magnetic ring 4 is made of metal, and the surface including the second surface 422b can be formed with high precision. It becomes easier to ensure the sealing property between the plug member 5 and the second surface 422b with the second surface 422b being formed with high precision.

In addition, an inward protrusion (i.e., inner periphery protrusion) 422c that protrudes radially inwardly is formed above the plug member 5 on the second surface 422b. The inward protrusion 422c has the function of preventing the plug member 5 from slipping out of the step portion 422 upward. The inner peripheral surface of the inward protrusion 422c has, at its upper end portion, an upper end tapered surface 422d with a tapered configuration in which a diameter decreases downward, and at its lower end portion, a lower end tapered surface 422e with a tapered configuration in which a diameter expands downward. Accordingly, when inserting the plug member 5 into the step portion 422, the plug member 5 is smoothly guided to a predetermined position within the step portion 422.

The plug member 5 closes an opening 12, which is formed between the upper end portion of the magnetic ring 4 and the upper end portion of the facing portion 311 and opens upward. The plug member 5 is formed over the entire circumferences of the magnetic ring 4 and the facing portion 311. The plug member 5 has a core portion 51 made of a cold-rolled steel plate such as SPCC (Steel Plate Cold Commercial) and maintaining the shape of the plug member 5, and an elastic portion 52 made of elastically deformable rubber covering the core portion 51. The core portion 51 is formed to have an L-shaped cross-section. The core portion 51 is embedded in the elastic portion 52 so as not to be exposed upward from the elastic portion 52. The elastic portion 52 has a portion 521 configured to be accommodated in the step portion 422 on its outer peripheral portion, and an elastic contact piece 522 that elastically contacts the upper end surface of the facing portion 311 in the axial direction. The elastic contact piece 522 is bent upward, so that a downward restoring force is always generated in the elastic contact piece 522. Due to this restoring force, the elastic contact piece 522 abuts on the upper surface of the facing portion 311 and the sealing property between the elastic contact piece 522 and the upper surface of the facing portion 311 is ensured.

As shown in FIGS. 1 and 2, the resin mold section 6 is molded to cover the housing 3 while exposing the magnetic ring 4 and the plug member 5. The resin mold section 6 generally covers a surface of a portion of the magnetostrictive torque sensor 1 below the annular surface 413 of the magnetic ring 4. On the other hand, the resin mold section 6 does not cover a portion of the magnetostrictive torque sensor 1 above the annular surface 413, the inner peripheral surface of the facing portion 311 of the first housing 31, and a portion 313 around the facing portion 311 on the lower surface of the first housing 31. The portion 313 is a portion where the die abuts with the housing 3 when molding the resin mold section 6.

A part of the resin mold section 6 is also provided on the covered outer peripheral surface 412 of the magnetic ring 4. The resin mold section 6 is provided with an outer annular surface 61 formed substantially flush or coplanar with the annular surface 413 of the magnetic ring 4. As shown in FIGS. 1 and 4, the cable 7 is drawn out from the housing 3 and the resin mold section 6.

The cable 7 includes one or more wires (i.e., electric wires) 71 electrically connected to the detection coil 2, and a sheath 72 surrounding the one or more wires 71. As shown in FIG. 4, there are plural wires 71 in the present embodiment, and the sheath 72 collectively covers the plural wires 71. Each wire 71 is a covered wire (i.e., coated wire) with a core wire and a coating. The sheath 72 is formed by forming a resin or the like having electrically insulating property into a cylindrical shape.

The plural wires 71 exposed from the sheath 72 are arranged in the wiring space 30 in the housing 3 (i.e., the first housing 31 and the second housing 32), and the sheath 72 is drawn out from an end portion 33 on the far side from the facing portion 311 in the housing 3. The end portion 33 of the housing 3 is annularly formed by the first housing 31 and the second housing 32 and exposed from the resin mold section 6. The heat shrinkable tube 8 is provided to prevent liquid or the like from entering the housing 3 through a gap between the housing 3 and the resin mold section 6 and the cable 7.

The heat shrinkable tube 8 is formed so as to collectively cover the boundary between the cable 7 and the housing 3 and the resin mold section 6 when viewed from the outside. The heat shrinkable tube 8 is configured to shrink at least toward the inner peripheral side (i.e., radially inwardly) of the heat shrinkable tube 8 when the temperature reaches a predetermined temperature or higher. The heat shrinkable tube 8 covers the end portion of the resin mold section 6 on the far side from the facing portion 311, the end portion 33 of the housing 3, and the end portion of the sheath 72 of the cable 7 on the housing 3-side. In the present embodiment, the heat shrinkable tube 8 is configured in such a manner that the length in a cable longitudinal direction of a portion covering the sheath 72 is longer than the length in the cable longitudinal direction of a portion covering the end portion 33 of the housing 3 and the resin mold section 6. In addition, a so-called hot melt, which is an adhesive material that melts at a predetermined temperature or higher and hardens again at a temperature lower than a predetermined temperature, may be provided on the inner peripheral portion of the heat shrinkable tube 8.

The heat shrinkable tube 8 is provided by the following method. First, the heat shrinkable tube 8 before heat shrinking, which has an outer diameter larger than the parts to be covered by the heat shrinkable tube 8 in the housing 3, the resin mold section 6, and the cable 7, is arranged so as to surround the parts to be covered by the heat shrinkable tube 8 in the housing 3, the resin mold section 6, and the cable 7. Next, by heating and shrinking the heat shrinkable tube 8, the heat shrinkable tube 8 is brought into close contact with the surfaces of the housing 3, the resin mold section 6, and the cable 7, either directly or via the hot melt, if any. The heat shrinkable tube 8 is provided as described above.

### (Functions and effects of the embodiment)

In the magnetostrictive torque sensor 1 of the present embodiment, the resin mold section 6 covers the housing 3 while exposing the magnetic ring 4 and the plug member 5. Therefore, since the resin mold section 6 is not arranged around the opening 12, the resin mold section 6 is prevented from entering the periphery of the detection coil 2 through the opening 12 when the resin mold section 6 is molded. Moreover, the magnetostrictive torque sensor 1 of the present embodiment includes the plug member 5 that closes the opening 12. As a result, even if the magnetic ring 4 is exposed from the resin mold section 6, it is possible to prevent foreign matters from entering the periphery of the detection coil 2 through the opening 12. Furthermore, a part of the housing 3 and the resin mold section 6 and the end portion of the exposed cable 7 from the housing 3 and the resin mold section 6 are covered with the heat shrinkable tube 8. As a result, the foreign matters such as oil, and liquid can be prevented from entering the interior of the magnetostrictive torque sensor 1 through the gap between the housing 3 and the resin mold section 6 and the cable 7.

The step portion 422 is formed between the upper end surface 4a and the inner peripheral surface 4b of the magnetic ring 4, and the plug member 5 is fitted in the step portion 422. This facilitates positioning (e.g., alignment) of the plug member 5 with respect to the magnetic ring 4. Here, the shape of the step portion 422 is desired to be formed with high precision because it affects the sealing property between the plug member 5 and the step portion 422. Therefore, by forming the step portion 422 on the magnetic ring 4 made of a ferromagnetic material (i.e., metal), the step portion 422 can be formed with higher precision than when the step portion 422 is formed on a resin member or the like. Thus, it is easy to secure the sealing property with the plug member 5. For example, in the case of a resin member, the surface shape tends to be different from the desired shape due to molding shrinkage of the resin member. However, the surface of the magnetic ring 4 made of the ferromagnetic material is formed with relatively high precision.

In addition, the inner peripheral surface of the step portion 422 has the inward protrusion 422c protruding toward the inner peripheral side (i.e., radially inwardly) at a position above the plug member 5. Therefore, it is possible to prevent the magnetic ring 4 from slipping out from the step portion 422.

The outer peripheral surface of the magnetic ring 4 has the covered outer peripheral surface 412 covered by the resin mold section 6, and the exposed outer peripheral surface 421 located above the covered outer peripheral surface 412 and exposed from the resin mold section 6. The surface of the magnetic ring 4 made of ferromagnetic material (i.e., metal) is formed with higher precision than the surface of the resin member. Therefore, by forming the outer surface of the magnetostrictive torque sensor 1 with the exposed outer peripheral surface 421, it is possible to prevent the outer shape of the magnetostrictive torque sensor 1 from deviating from a desired shape. If the outer shape of the magnetostrictive torque sensor 1 deviates from the desired shape, for example, when the magnetostrictive torque sensor 1 is attached to the member to be attached (i.e., attachment object), the magnetostrictive torque sensor 1 may easily interfere with the attachment object and parts arranged around it. However, this can be suppressed in the present embodiment.

In addition, the lower surface of the magnetic ring 4 faces the housing 3, and the covered outer peripheral surface 412 has the enlarged diameter surface portion 412a whose diameter increases downward. Therefore, the housing 3 prevents the magnetic ring 4 from slipping out of the resin mold section 6 downward, and the resin mold section 6 provided on the enlarged diameter surface portion 412a prevents the magnetic ring 4 from slipping out of the resin mold section 6 upward.

Also, the magnetostrictive torque sensor 1 is configured to be attached to the attachment target 100 by fitting the magnetic ring 4 to the inner peripheral surface of the attachment hole 100a in such a manner that the exposed outer peripheral surface 421 faces the inner peripheral surface of the attachment hole 100a. This makes it possible to easily attach the magnetostrictive torque sensor 1 to the attachment target 100. As an example, the magnetostrictive torque sensor 1 can be attached to the attachment target 100 without using bolts. In addition, since the magnetic ring 4 that can be formed with high precision is fitted to the inner peripheral surface of the attachment hole 100a at the exposed outer peripheral surface 421, the magnetic ring 4 can be easily fitted to the inner peripheral surface of the attachment hole 100a. That is, for example, when a resin member, which is difficult to form with high precision, is fitted to the inner peripheral surface of the attachment hole 100a, the resin member may be formed too large to fit into the attachment hole 100a. The occurrence of such a situation can be suppressed in the present embodiment.

In addition, the outer diameter of the covered outer peripheral surface 412 is larger than the outer diameter of the exposed outer peripheral surface 421, and the upward-facing annular surface 413 is formed between the covered outer peripheral surface 412 and the exposed outer peripheral surface 421 on the surface of the magnetic ring 4. Therefore, the magnetostrictive torque sensor 1 can be easily positioned (e.g., aligned) with respect to the attachment target 100 by making the attachment target 100 abut the annular surface 413 when the magnetic ring 4 is fitted to the inner peripheral surface of the attachment hole 100a.

The concave surface 421b recessed toward the inner peripheral side (i.e., radially inwardly) is formed at the end portion of the exposed outer peripheral surface 421 on the covered outer peripheral surface 412-side. Therefore, it is possible to fit the magnetic ring 4 to the inner peripheral surface of the attachment hole 100a until the annular surface 413 abuts the attachment target 100. Here, for example, if the concave surface 421b is not formed on the exposed outer peripheral surface 421, it is difficult to form a corner between the exposed outer peripheral surface 421 and the annular surface 413 at 90 degrees in terms of manufacturing. A slight curved surface (i.e., round surface) is formed between the exposed outer peripheral surface 421 and the annular surface 413. Therefore, if the concave surface 421b is not formed on the exposed outer peripheral surface 421, when the magnetic ring 4 is fitted to the inner peripheral surface of the attachment hole 100a, the curved surface interferes with the attachment target 100, so that the exposed outer peripheral surface 421 cannot fit into the inner peripheral surface of the attachment hole 100a until the annular surface 413 abuts the attachment target 100. Therefore, in the present embodiment, by providing the concave surface 421b at the lower end portion of the exposed outer peripheral surface 421, the annular surface 413 and the attachment target 100 can abut with each other when the magnetic ring 4 is fitted into the inner peripheral surface of the attachment hole 100a.

As described above, according to this embodiment, it is possible to provide a magnetostrictive torque sensor capable of suppressing the resin mold section from entering around the detection coil.

## Claims

1. A magnetostrictive torque sensor (1) for detecting a torque applied to a magnetostrictive member (10) having magnetostrictive properties, comprising:
a detection coil (2) arranged on an outer peripheral side of the magnetostrictive member (10);
a magnetic ring (4) comprising a ferromagnetic material arranged on an outer peripheral side of the detection coil (2);
a housing (3) having a facing portion (311) facing the magnetic ring (4) across the detection coil (2);
a plug member (5) closing an opening (12) formed between the magnetic ring (4) and the facing portion (311);
a resin mold section (6) covering the housing (3) while exposing the magnetic ring (4) and the plug member (5);
a cable (7) electrically connected to the detection coil (2) and drawn out from the housing (3) and the resin mold section (6); and
a heat shrinkable tube (8) covering and configured to be brought by heating into close contact with the surfaces of the housing (3), a portion of the resin mold section (6), and an end portion of the cable (7) exposed from the housing (3) and the resin mold section (6).

2. The magnetostrictive torque sensor (1) according to claim 1, wherein a step portion (422) is formed between an end surface (4a) on an opening side of the opening (12) and an inner peripheral surface (4b) in the magnetic ring (4), and wherein the plug member (5) is fitted into the step portion (422).

3. The magnetostrictive torque sensor (1) according to claim 2, wherein an inner peripheral surface of the step portion (422) comprises an inward protrusion (422c) that protrudes radially inwardly at a position closer to the opening side than the plug member (5).

4. The magnetostrictive torque sensor (1) according to any one of claims 1 to 3, wherein an outer peripheral surface of the magnetic ring (4) comprises a covered outer peripheral surface (412) covered with the resin mold section (6), and an exposed outer peripheral surface (421) positioned closer to the opening side than the covered outer peripheral surface (412) and exposed from the resin mold section (6).

5. The magnetostrictive torque sensor (1) according to claim 4, wherein a surface of the magnetic ring (4) opposite to the opening side faces the housing (3), and wherein the covered outer peripheral surface (412) includes an enlarged diameter surface portion (412a) that expands toward a side opposite to the opening side.

6. The magnetostrictive torque sensor (1) according to claim 4 or 5, wherein the magnetostrictive torque sensor (1) is configured to be attached to an attachment target (100) by fitting the magnetic ring (4) in such a manner that the exposed outer peripheral surface (421) faces an inner peripheral surface of an attachment hole (100a) of the attachment target (100).

7. The magnetostrictive torque sensor (1) according to claim 6, wherein an outer diameter of the covered outer peripheral surface (412) is larger than an outer diameter of the exposed outer peripheral surface (421), and wherein an annular surface (413) facing the opening side is formed between the covered outer peripheral surface (412) and the exposed outer peripheral surface (421) on a surface of the magnetic ring (4).

8. The magnetostrictive torque sensor (1) according to claim 7, wherein an end portion of the exposed outer peripheral surface (421) on a side of the covered outer peripheral surface (412) is formed with a concave surface (421b) recessed radially inwardly.

## Patentansprüche

1. Magnetostriktiver Drehmomentsensor (1) zum Erfassen eines Drehmoments, das auf ein magnetostriktives Element (10) mit magnetostriktiven Eigenschaften ausgeübt wird, umfassend:
eine Erfassungsspule (2), die an einer äußeren Umfangsseite des magnetostriktiven Elements (10) angeordnet ist;
einen magnetischen Ring (4), der ein ferromagnetisches Material umfasst und an einer äußeren Umfangsseite der Erfassungsspule (2) angeordnet ist;
ein Gehäuse (3) mit einem dem Magnetring (4) zugewandten Abschnitt (311) jenseits der Erfassungsspule (2);
ein Verschlusselement (5), das eine zwischen dem Magnetring (4) und dem zugewandten Abschnitt (311) gebildete Öffnung (12) verschließt;
einen Harzformabschnitt (6), der das Gehäuse (3) abdeckt und dabei den Magnetring (4) und das Verschlusselement (5) freilegt;
ein Kabel (7), das elektrisch mit der Erfassungsspule (2) verbunden ist und aus dem Gehäuse (3) und dem Harzformabschnitt (6) herausgeführt ist; und
einen Schrumpfschlauch (8), der die Oberflächen des Gehäuses (3), eines Teils des Harzformabschnitts (6) und eines Endabschnitts des Kabels (7), der aus dem Gehäuse (3) und dem Harzformabschnitt (6) herausragt, bedeckt und so gestaltet ist, dass er durch Erwärmung in engen Kontakt mit ihnen gebracht wird.

2. Magnetostriktiver Drehmomentsensor (1) nach Anspruch 1, wobei ein Stufenabschnitt (422) zwischen einer Endfläche (4a) auf einer Öffnungsseite der Öffnung (12) und einer inneren Umfangsfläche (4b) in dem Magnetring (4) ausgebildet ist, und wobei das Verschlusselement (5) in den Stufenabschnitt (422) eingesetzt ist.

3. Magnetostriktiver Drehmomentsensor (1) nach Anspruch 2, wobei eine innere Umfangsfläche des Stufenabschnitts (422) einen nach innen gerichteten Vorsprung (422c) aufweist, der an einer Position, die näher an der Öffnungsseite liegt als das Verschlusselement (5), radial nach innen vorspringt.

4. Magnetostriktiver Drehmomentsensor (1) nach einem der Ansprüche 1 bis 3, wobei eine äußere Umfangsfläche des Magnetrings (4) eine abgedeckte äußere Umfangsfläche (412), die mit dem Harzformabschnitt (6) abgedeckt ist, und eine freiliegende äußere Umfangsfläche (421) aufweist, die näher an der Öffnungsseite als die abgedeckte äußere Umfangsfläche (412) positioniert ist und von dem Harzformabschnitt (6) freiliegt.

5. Magnetostriktiver Drehmomentsensor (1) nach Anspruch 4, wobei eine Oberfläche des Magnetrings (4), die der Öffnungsseite gegenüberliegt, dem Gehäuse (3) zugewandt ist, und wobei die abgedeckte äußere Umfangsfläche (412) einen Oberflächenteil (412a) mit vergrößertem Durchmesser aufweist, der sich zu einer der Öffnungsseite gegenüberliegenden Seite hin erweitert.

6. Magnetostriktiver Drehmomentsensor (1) nach Anspruch 4 oder 5, wobei der magnetostriktive Drehmomentsensor (1) so konfiguriert ist, dass er an einem Befestigungsziel (100) befestigt werden kann, indem der Magnetring (4) so angebracht wird, dass die freiliegende äußere Umfangsfläche (421) einer inneren Umfangsfläche eines Befestigungslochs (100a) des Befestigungsziels (100) gegenüberliegt.

7. Magnetostriktiver Drehmomentsensor (1) nach Anspruch 6, wobei ein Außendurchmesser der abgedeckten Außenumfangsfläche (412) größer ist als ein Außendurchmesser der freiliegenden Außenumfangsfläche (421), und wobei eine ringförmige Fläche (413), die der Öffnungsseite zugewandt ist, zwischen der abgedeckten Außenumfangsfläche (412) und der freiliegenden Außenumfangsfläche (421) auf einer Oberfläche des Magnetrings (4) ausgebildet ist.

8. Magnetostriktiver Drehmomentsensor (1) nach Anspruch 7, wobei ein Endabschnitt der freiliegenden Außenumfangsfläche (421) auf einer Seite der abgedeckten Außenumfangsfläche (412) mit einer konkaven Oberfläche (421b) ausgebildet ist, die radial nach innen zurückgesetzt ist.

## Revendications

1. Un capteur de couple (1) magnétostrictif pour détecter un couple appliqué à un élément magnétostrictif (10) ayant des propriétés magnétostrictives, comprenant :
une bobine de détection (2) agencée sur un côté périphérique externe de l'élément magnétostrictif (10) ;
un anneau magnétique (4) comprenant un matériau ferromagnétique disposé sur un côté périphérique externe de la bobine de détection (2) ;
un boîtier (3) ayant une partie de façade (311) tournée vers l'anneau magnétique (4) à travers la bobine de détection (2) ;
un élément d'enfichage (5) fermant une ouverture (12) formée entre l'anneau magnétique (4) et la partie de façade (311) ;
une section (6) de moule en résine recouvrant le boîtier (3) tout en exposant l'anneau magnétique (4) et l'élément d'enfichage (5) ;
un câble (7) connecté électriquement à la bobine de détection (2) et retiré du boîtier (3) et de la section (6) de moule en résine ; et
un tube thermorétractable (8) recouvrant et configuré pour être amené par chauffage en contact étroit avec les surfaces du boîtier (3), une partie de la section (6) de moule en résine et une partie d'extrémité du câble (7) exposée du boîtier (3) et de la section (6) de moule en résine.

2. Le capteur de couple (1) magnétostrictif selon la revendication 1, dans lequel une partie en épaulement (422) est formée entre une surface d'extrémité (4a) sur un côté d'ouverture de l'ouverture (12) et une surface périphérique interne (4b) dans l'anneau magnétique (4), et dans lequel l'élément d'enfichage (5) est ajusté dans la partie en épaulement (422).

3. Le capteur de couple (1) magnétostrictif selon la revendication 2, dans lequel une surface périphérique interne de la partie en épaulement (422) comprend une saillie vers l'intérieur (422c) qui fait saillie radialement vers l'intérieur en une position plus proche du côté ouverture que l'élément d'enfichage (5).

4. Le capteur de couple (1) magnétostrictif selon l'une quelconque des revendications 1 à 3, dans lequel une surface périphérique externe de l'anneau magnétique (4) comprend une surface périphérique externe recouverte (412) recouverte de la section (6) de moule en résine, et une surface périphérique externe exposée (421) positionnée plus près du côté ouverture que la surface périphérique externe recouverte (412) et exposée depuis la section (6) de moule en résine.

5. Le capteur de couple (1) magnétostrictif selon la revendication 4, dans lequel une surface de l'anneau magnétique (4) opposée au côté ouverture est tournée vers le boîtier (3), et dans lequel la surface périphérique externe recouverte (412) comprend une partie de surface (412a) de diamètre élargi, qui s'étend vers un côté opposé au côté d'ouverture.

6. Le capteur de couple (1) magnétostrictif selon la revendication 4 ou la revendication 5, dans lequel le capteur de couple (1) magnétostrictif est configuré de façon à être fixé à une cible de fixation (100) en ajustant l'anneau magnétique (4) de telle manière que la surface périphérique externe exposée (421) soit en face d'une surface périphérique interne d'un trou de fixation (100a) de la cible de fixation (100).

7. Le capteur de couple (1) magnétostrictif selon la revendication 6, dans lequel un diamètre extérieur de la surface périphérique extérieure recouverte (412) est plus grand qu'un diamètre extérieur de la surface périphérique extérieure exposée (421), et dans lequel une surface annulaire (413) faisant face au côté ouverture est formé entre la surface périphérique externe recouverte (412) et la surface périphérique externe exposée (421) sur une surface de l'anneau magnétique (4).

8. Le capteur de couple (1) magnétostrictif selon la revendication 7, dans lequel une partie d'extrémité de la surface périphérique extérieure exposée (421) sur un côté de la surface périphérique extérieure recouverte (412) est formée avec une surface concave (421b) en retrait radialement vers l'intérieur.
